Europäisches Patentamt

European Patent Office

Office européen des brevets

(19)

(11) Publication number: **0 163 527 B1**

(12) # EUROPEAN PATENT SPECIFICATION

(45) Date of publication of patent specification: **29.05.91**   (51) Int. Cl.⁵: **G11B 15/665**

(21) Application number: **85303772.9**

(22) Date of filing: **29.05.85**

(54) **Magnetic recording and/or reproducing apparatus.**

(30) Priority: **30.05.84 JP 108552/84**

(43) Date of publication of application:
**04.12.85 Bulletin 85/49**

(45) Publication of the grant of the patent:
**29.05.91 Bulletin 91/22**

(84) Designated Contracting States:
**AT DE FR GB NL**

(56) References cited:
**EP-A- 71 975**
**DE-A- 2 719 768**
**FR-A- 2 541 808**
**FR-A- 2 552 577**

(73) Proprietor: **SONY CORPORATION**
**7-35 Kitashinagawa 6-Chome Shinagawa-ku Tokyo 141(JP)**

(72) Inventor: **Nagasawa, Tsuyoshi c/o SONY COR-**
**PORATION**
**Patents Division 7-35, Kitashinagawa-**
**6-chome**
**Shinagawa-ku Tokyo(JP)**
Inventor: **Yamamoto, Yoshinori c/o SONY**
**CORPORATION**
**Patents Division 7-35, Kitashinagawa-**
**6-chome**
**Shinagawa-ku Tokyo(JP)**
Inventor: **Ohyama, Masao c/o SONY CORPO-**
**RATION**
**Patents Division 7-35, Kitashinagawa-**
**6-chome**
**Shinagawa-ku Tokyo(JP)**
Inventor: **Fukuyama, Yutaka c/o SONY COR-**
**PORATION**
**Patents Division 7-35, Kitashinagawa-**
**6-chome**
**Shinagawa-ku Tokyo(JP)**

(74) Representative: **Purvis, William Michael**
**Cameron et al**
**D. Young & Co. 10 Staple Inn**
**London WC1V 7RD(GB)**

## Description

The invention relates to magnetic recording and/or reproducing apparatus provided with a magnetic tape loading device. The apparatus is particularly useful as a video tape recorder or a so-called helical scanning type audio tape recorder pursuant to the pulse code modulation (PCM) system.

Conventional helical scanning tape magnetic recording and reproducing apparatus is so arranged that fixed drums mounted upright on the chassis of a magnetic head unit including a rotary magnetic head or heads are mounted coaxially to each other and the magnetic tape travels on an inclined path about the outer periphery of the drums for forming inclined recording tracks on the tape by the rotary magnetic head or heads operating at a high r.p.m., for recording and/or reproducing of information signals.

Such magnetic recording and reproducing apparatus is provided with a loading unit whereby the magnetic tape is extracted out of the tape cassette mounted in position within the recording or reproducing apparatus so as to be placed in engagement with the outer periphery of the drums. The loading unit is composed of rotary members, such as loading rings, provided with loading blocks in turn equipped with deflection guide or inclined guide members for the magnetic tape. By the controlled rotation of these rotary members, the loading unit may be transferred from inside the tape cassette to a loading end position in the vicinity of the drums.

The recording and/or reproducing apparatus is also provided with a control electric motor for driving the rotary members and a switch for detecting the position of the loading blocks.

In addition, the magnetic recording and/or reproducing apparatus is provided with a pinch roller pressing control unit for establishing or releasing a pressure contact between the capstan and the pinch roller. The pinch roller pressing control unit is so arranged that the pinch roller is mounted to one end of a supporting arm the other end of which is supported for free rotation about a pivot shaft. The pinch roller is pressed against the capstan with the tape interposed therebetween by partial rotation of the supporting arm with the aid of for instance, a solenoid plunger. In addition, the apparatus is so designed that the constant speed running of the magnetic tape may take place while the pinch roller is in pressure contact with the capstan (pinch ON state) and the tape stop (STOP), rewind (REW) or fast feed (FF) may take place while the pinch roller is released from pressure contact with the capstan (pinch OFF state).

When the loading unit and the pinch roller control unit are constructed as separate units, as in the case of the above described conventional magnetic recording or reproducing apparatus, separate driving sources are required for the loading and the pressing control units, resulting in an increased number of the component parts and a complicated structure of the recording or reproducing apparatus. Likewise, the assembly operation is complicated and the small and compact apparatus can be fabricated only with considerable difficulties. In addition, when the loading block and the pinch roller are driven by separate driving units, the chance of troubles or mulfunction is enhanced because of the independent manner of operation of the driving units, with the result that the operational reliability is necessarily lowered.

Patent Specification EP-A-71975 discloses a cassette tape recorder according to the first part of claim 1 wherein both tape loading means and pinch roller control means are powered by the same control motor.

Patent Specification DE-A 2 719 768 discloses a video tape recorder wherein members to effect loading of a tape onto a rotary drum are controlled by loading rings rotatable about the drum.

According to the invention there is provided cassette tape magnetic recording and/or reproducing apparatus comprising

a rotary drum unit having a magnetic head or magnetic heads for recording or reproducing signals on or from magnetic tape on the peripheral surface of the drum unit;

an electric motor;

loading means including tape guide means and means mounting the tape guide mean for limited movements in predetermined paths between first positions in which the tape guide means are engageable with the magnetic tape within a cassette, and second positions in which the tape guide means guide the tape withdrawn from the cassette about at least a portion of the peripheral surface of the drum unit, in which second positions the magnetic head or magnetic heads can record or reproduce signals thereon; and a control block situated on the chassis corresponding to the second position of the respective tape guide means and against which the tape guide means can be urged in the loading direction by yieldable means whereby the control block positionally stabilizes the tape guide means urged thereagainst;

a capstan to rotate at a constant speed;

means supporting a pinch roller for movement between an engaged position in which the pinch roller is pressed against the capstan with the tape therebetween and a disengaged position in which the pinch roller is separated from the capstan; and pinch roller actuating means engageable with the pinch roller supporting means to cause movement of the pinch roller to the engaged position pressed against the capstan, the electric motor being actuatable to shift the loading means between the first and second positions and to shift the pinch roller actuating means to control the movement of the pinch roller supporting means between the engaged and disengaged positions;
characterised by rotary ring means coupled to the electric motor to be turned in opposed loading and unloading directions, and arms pivoted on the rings and extending between the ring means and the tape guide means and causing the tape guide means to move with the ring means between said first and second positions in response to the turning of the ring means in the loading and unloading directions, the arms being biased by spring means against pivoting of the arms upon further turning of the ring means in the loading direction after the tape guide means have completed said limited movements to the second positions;, said pinch roller actuating means being mounted on the rotary ring means and causing said movement of the pinch roller to its engaged position in response to said further turning of the ring means in the loading direction.

Such a magnetic recording and/or reproducing apparatus can avoid the necessity for providing complicated driving sources for driving the loading blocks and the pinch roller.

Preferably the connecting means comprises arm means pivotally connected, at one end, to the tape guide means, and follower pin means at the other end of the arm means; and in which the rotary ring means has arcuate slot means therein slidably receiving the follower pin means, and the yieldable means is in the form of tension spring means urging the follower pin means against one end of the arcuate slot means.

Advantageously the pinch roller actuating means includes an actuating member mounted on the rotary ring means for limited movements relative to the rotary ring means in the loading and unloading directions and engageable with the means supporting the pinch roller, and second tension spring means connected between the rotary ring means and the actuating member yieldably to urge the actuating member to the limit of said movements thereof relative to the ring means in the loading direction, the second tension spring means being loaded upon movement of the pinch roller to the engaged position to provide the force with which the pinch roller is pressed against the capstan.

Preferably the means supporting the pinch roller includes a support arm which is pivotally mounted adjacent one end and which rotatably supports the pinch roller at a distance from said one end, the support arm being biased in a direction moving the pinch roller away from the capstan, an actuating pin extending from the support arm and the actuating member having a nose portion extending radially with respect to the ring means and to bear against the actuating pin upon turning of the ring means in the loading direction.

Advantageously the means mounting the tape guide means includes a chassis having a slot therein for each of the tape guide means and along which the tape guide means is directed in the respective path.

The invention is diagrammatically illustrated by way of example in the accompanying drawings, in which:-

Figure 1 is a perspective view showing parts of magnetic recording and/or reproducing apparatus according to the invention, with a portion thereof cut away;

Figure 2 is a schematic plan view of the magnetic recording and/or reproducing apparatus of Figure 1;

Figure 3 is a schematic rear view of the apparatus of Figure 1;

Figure 4 is a schematic underneath view of the apparatus of Figure 1;

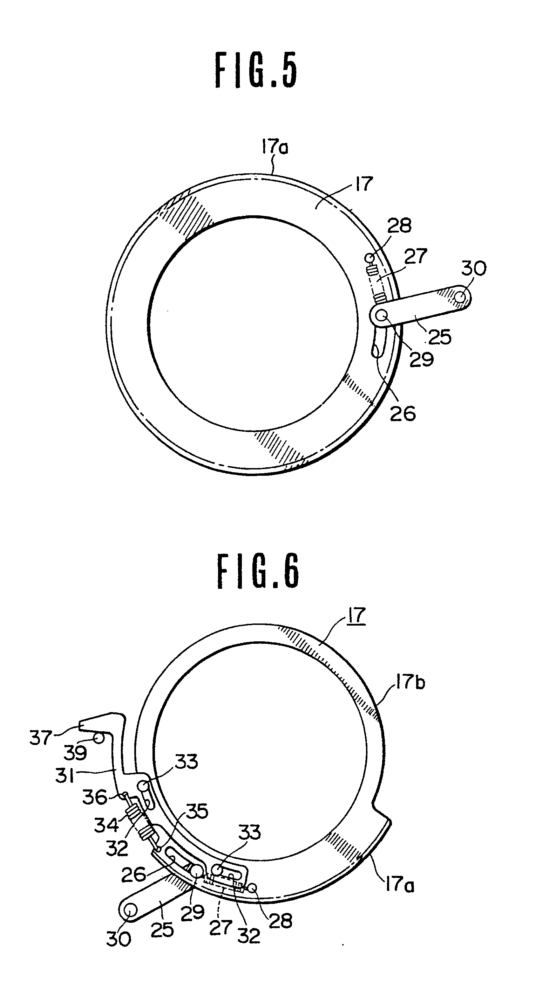

Figure 5 is a plan view showing one rotary member employed in the apparatus of Figure 1;

Figure 6 is a bottom view showing another rotary member employed in the apparatus of Figure 1;

Figure 7 is an enlarged sectional view of a supporting structure for a tape guide block employed in the apparatus of Figure 1, with a portion thereof being omitted;

Figure 8 is a plan view showing a control block employed in the apparatus of Figure 1;

Figure 9 is a side view showing the mounting state of the control block of Figure 8, with a portion cut away;

Figure 10 is a side view showing a tape guide block abutting on the control block of Figures 8 and 9, with a portion cut away;

Figure 11 is a plan view showing a tape loading operation of the apparatus of Figure 1; and

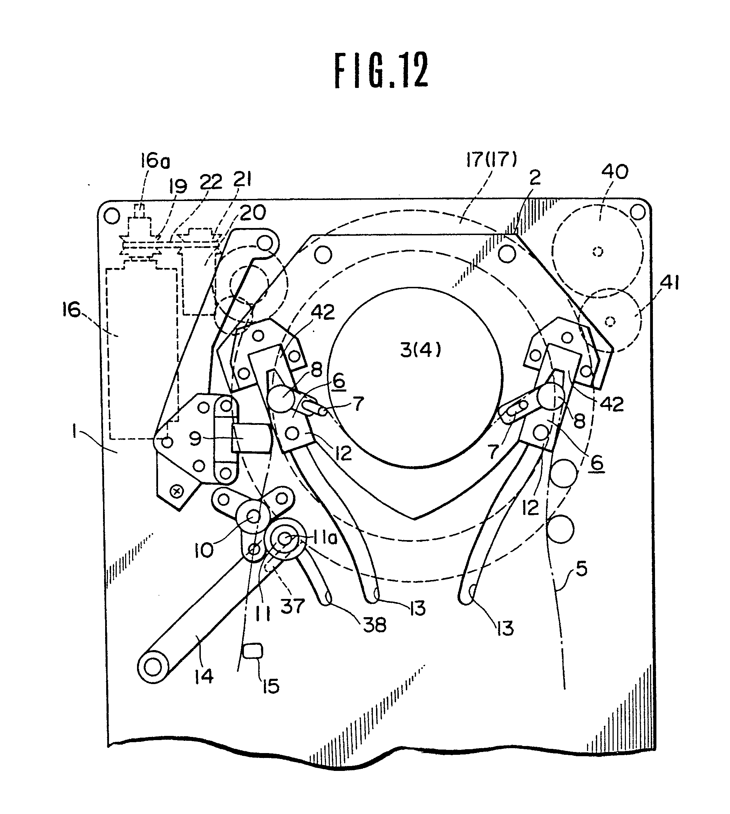

Figure 12 is a plan view showing the end of loading state of the apparatus shown in Figure 1.

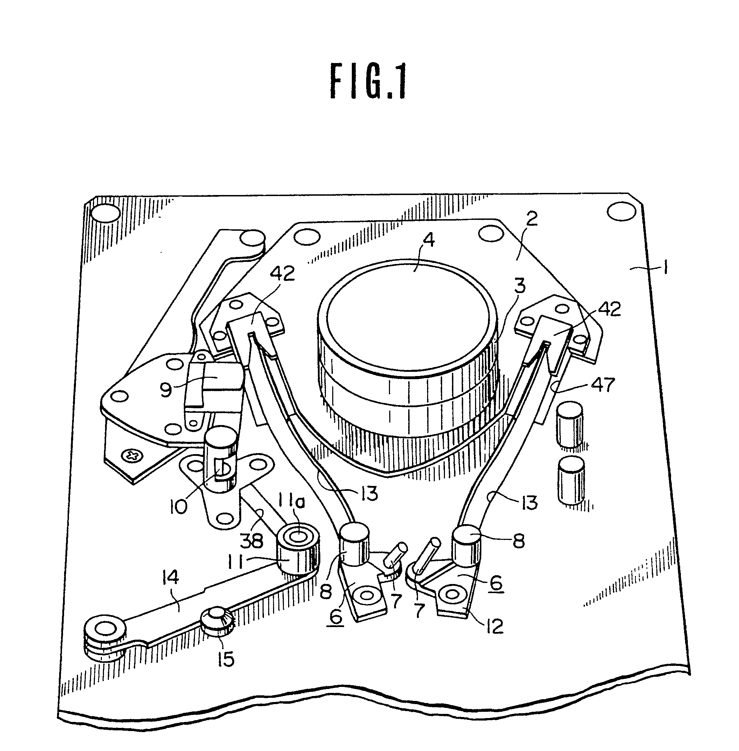

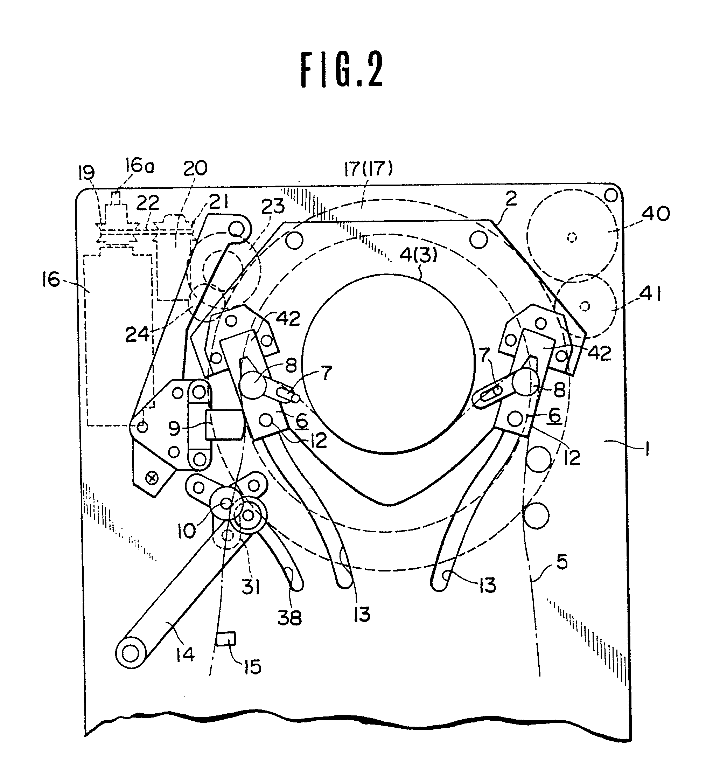

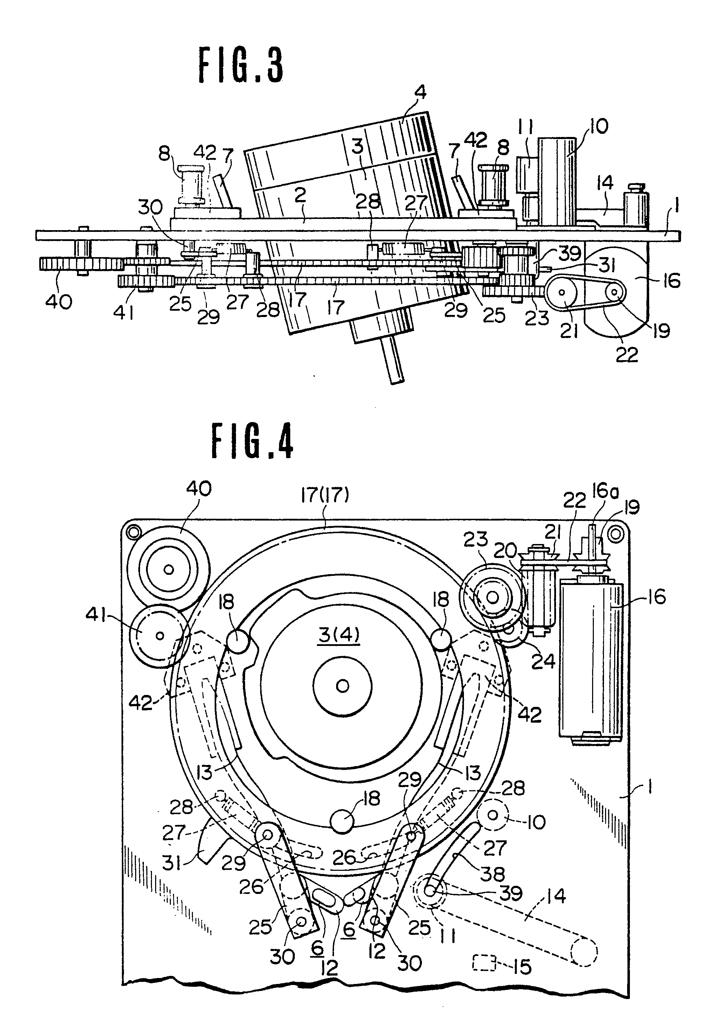

The magnetic recording or reproducing apparatus of the illustrated embodiment is of the so-called helical scanning type and, as shown in Figures 1 and 2, has a fixed drum 3 mounted on a drum mounting base plate 2 provided on a chassis 1, and a rotary drum 4 mounted on the top of the fixed drum 3. Signals are recorded on or reproduced from a magnetic tape 5 by a rotary magnetic head or heads, not shown, of a magnetic head unit co-operating with the rotary drum 4. The drum mounting base plate 2 is mounted on the chassis 1 with fine adjustment of the height and mounting angle of the mounting base 2 with respect to the chassis 1, while the drums 3, 4, mounted with a tilt on the drum mounting base plate 2 as shown in Figure 3, are mounted with fine adjustment of the height and mounting angle of the drums 3, 4, with respect to the chassis 1. A magnetic tape 5 extends over about a 90° arc of the drums 3, 4 as it is guided by inclined guide members 7, 7 and deflection guide members 8, 8 belonging to a pair of tape guide blocks 6, 6 making up a loading unit. On the chassis 1 are mounted a head block 9 provided with an erasure head and a control head, and a capstan 10, against which a pinch roller 11 is pressed with the magnetic tape 5 interposed between the capstan and the pinch roller. The rotary magnetic head is driven in rotation by the rotation of the drum 4 for forming recording tracks on the magnetic tape 5 in such a manner that the information is recorded on or reproduced from the magnetic tape 5 according to, for example, the pulse code modulation (PCM) system. To this end, the tape 5 wound about the drum periphery as described above is caused to travel and is guided by the capstan 10, the pinch roller 11 and the guide members 7, 8.

The magnetic recording or reproducing apparatus is so designed that the magnetic tape 5 is extracted from a tape cassette, not shown, by the tape guide blocks 6, 6, so as to be loaded about the outer periphery of the drums 3, 4. Each tape guide block 6 is provided with a guide base member 12 movable on the chassis 1. On each guide base member 12 are mounted the inclined guide member 7 and the upright deflection guide member 8. The upper and bottom sides of the guide base members 12 are formed in part by flat positioning surfaces and the guide members 7, 8 are mounted with fine adjustment of the mounting angle thereof with respect to these flat surfaces. The tape guide blocks 6, 6 arranged in the manner described above are movable, for loading the tape, along a pair of guide slots 13, 13 formed through the chassis 1 in such a manner that the tape guide blocks 6, 6 are transferred from a position inside the tape cassette to a preset loading position adjacent the drums 3, 4. This position is shown in Figure 3.

The pinch roller 11 is connected to one end of a supporting arm 14 the other end of which is mounted for free rotation on the chassis 1 so that the pinch roller 11 may be turned about the other end of the supporting arm 14 so as to be brought into or be released from pressure contact with the capstan 10. The other end of the supporting arm 14 is associated with a return spring, not shown, whereby the pinch roller 11 is urged in a direction away from the capstan 10. The supporting arm 14 is limited in its movement away from the capstan 19 by a stop 15 provided on the chassis 1 so that the supporting arm 14 is held in the preset position by the force of the return spring.

In the magnetic recording or reproducing apparatus, there are provided on the underside of the chassis 1 a pair of rotary members 17, 17 and a unitary control motor 16, as shown in Figure 4. The control motor 16 controls operation of the pinch roller 11 and the tape guide blocks 6, 6.

The rotary members 17, 17 are in the form of superimposed flat rings and can turn in mutually opposite directions independently of each other. To this end the rotary members 17, 17 are slidably engaged at the inner periphery thereof in mating grooves provided in e.g. three guide elements 18 in turn mounted in a depending manner on the underside of the chassis 1. The outer peripheries of the rotary members 17, 17 are provided with teeth 17a, 17a, respectively.

The electric control motor 16 is disposed to one side of the rotary members 17, 17 and has its driving shaft 16a fitted with a belt wheel 19. To one side of the control motor 16 and adjacent the rotary members 17, 17 is rotatably mounted a worm gear 20 in parallel with the driving shaft 16a. To one end of the worm gear 20 is integrally mounted a belt wheel 21 and a transmission belt 22 such as a rubber belt extends around the belt wheel 21 and the belt wheel 19 attached to the driving shaft 16a. In this manner, the worm gear 20 can be turned in either direction by operation of the control motor 16.

The teeth 17a of one of the rotary members 17 mesh with the worm gear 20 via a single worm wheel 23, whereas the teeth 17a of the other rotary member 17 mesh with the worm gear 20 via the worm wheel 23 and an idler 24. Therefore, the rotary members 17, 17 are rotated in mutually opposite directions by rotation of the worm gear 20 which is caused by the operation of the control motor 16.

Said other one of the rotary members 17 which is located adjacent the chassis 1 is provided with a circumferential cut-out 17b through which said one rotary member 17 is partially exposed to the underside of the chassis 1. Portions of the rotary members 17, 17 which face the chassis 1 have a pair of elongate slots 26 therein which accommodate a pair of loading arms 25 each carrying a respective one of the loading blocks 6. To said portions of the rotary members 17, 17 are also attached one end of limiting springs 27, such as coil springs, for acting on the loading arms 25. The through-slots 26, 26 are provided along the circumference of the rotary members 17, 17, and said one ends of the limiting springs 27, 27 are retained by engaging projections 28 provided at the circumferentially forward ends of the pair of elongate through slots 26, 26.

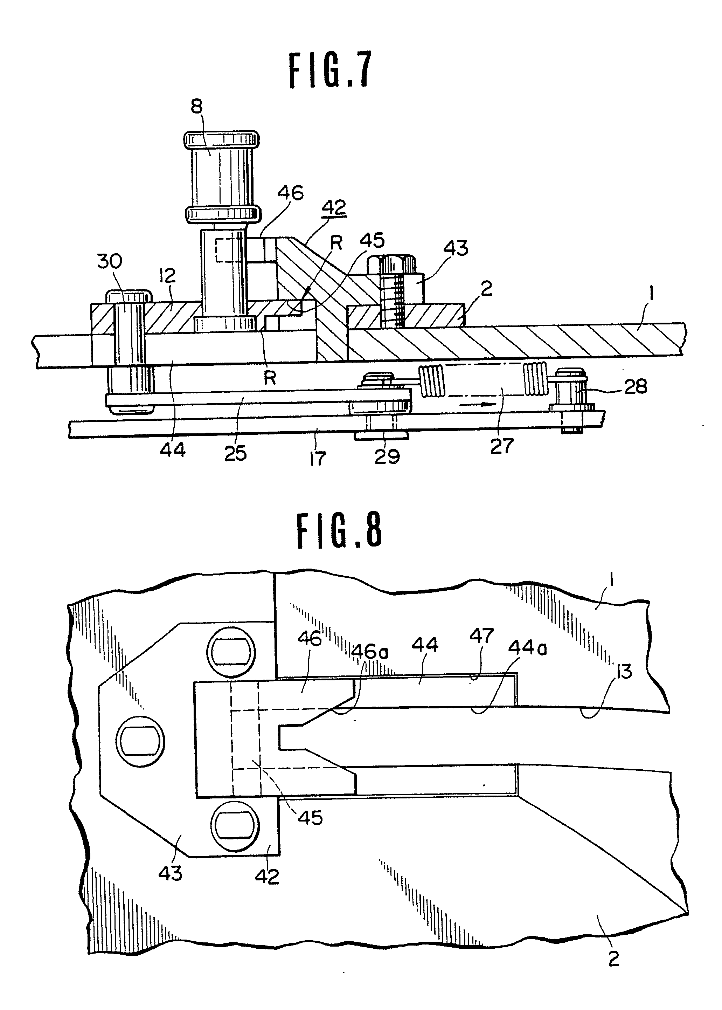

Referring now to Figure 7, first ends of the loading arms 25, 25 are provided with projections 29 engaged in the elongate through slots 26 so that the loading arms are movable along the slots 26 with respect to the rotary members 17, 17. The other ends of the limiting springs 27, 27 are retained by the projections 29. To the other ends of the loading arms 25, 25 are attached a pair of fixed shafts 30, 30 that are inserted through the guide slots 13 in the chassis 1 and project upwardly beyond the top surface of the chassis 1. To these fixed shafts 30 are attached the tape guide blocks 6, 6.

To said other rotary member 17 is mounted a pinch roller operating lever 31 for pressing the pinch roller 11 against the capstan 10. The base part of the operating lever 31 is provided with a pair of elongate through-holes 32 into which are fitted a pair of projections 33, 33 provided on the other rotary member 17. In this manner, the operating lever 31 is guided by the projections 33, 33 so as to be movable along the through-holes 32, 32. The other rotary member 17 has a through-hole 35 in which is engaged one end of a limiting spring 34 acting on the pinch roller operating lever 31. The other end of the limiting spring 34 is retained in a through-hole 36 in the pinch roller operating lever 31 so that the operating lever 31 is urged in the circumferentially forward direction of the rotary member 17. The foremost part of the pinch roller operating lever 31 is bent into an L-shaped engaging portion 37.

The supporting arm 14 rotatably carrying the pinch roller 11 is provided with a downward projection 39 coaxial with a supporting shaft 11a of the pinch roller 11.

The projection 39 is introduced through the guide slot 38 formed in the chassis for guiding the pinch roller 11 and projects towards the underside of the chassis 1. The projection 39 is engaged with the foremost portion 37 of the pinch roller operating lever 31, in such a manner that, with the movement of the pinch roller operating lever 31 caused by the rotation of the associated rotary member 17, the supporting arm 14 is moved along the guide slot 38 against the resiliency of the return spring. The mounting position of the pinch roller operating lever 31 is so selected that, as the loading blocks 6, 6 are moved towards a preset loading position by the rotation of the rotary members 17, 17, the projection 39 is engaged with the foremost portion 37 for shifting the pinch roller 11 and, after the tape guide blocks 6, 6 have been shifted to the preset loading position, as the rotary members 17, 17 are rotated further, the pinch roller 11 is brought into pressure abutment with the capstan 10.

On the underside of the chassis 1, there is provided a rotary encoder 40 for sensing the rotary position of the rotary members 17, 17 for controlling the operation of the control motor 16. The rotary encoder 40 meshes with the tooth rack 17a of said one of the rotary members 17 by way of an idler pinion 41 so as to be rotated with rotation of the rotary member 17. On the outer periphery of the rotary encoder 40 is formed a pattern of circumferentially alternate black and white indicia, not shown. The number and direction of these indicia are read by a photocoupler, not shown, comprising a combination of light emitting diodes and phototransistors during the rotation of the encoder 40 and hence form indicia for detecting the rotary position of the rotary members 17, 17.

The magnetic recording and reproducing apparatus is provided with control blocks 42, 42 for positioning and holding the tape guide blocks 6, 6 in the preset loading position. These control blocks 42, 42 are provided on the drum mounting base plate 2 on both sides of the drums 3, 4.

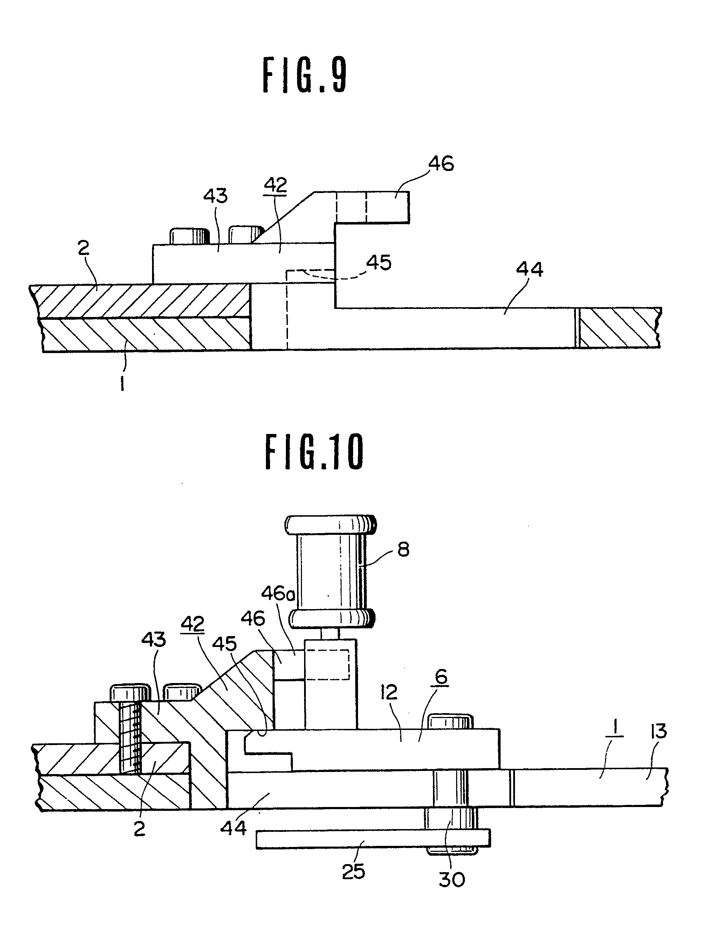

Referring to Figures 8 and 9, each control block 42 is integrally formed by a mounting piece 43 threadedly mounted on the drum mounting base plate 2, a slide piece 44 for controlling the flat bottom surface of the guide base member 12 of the associated tape guide block 6, a slide step 45 for controlling the upper flat surface of the guide base member 12 and a control piece 46 for receiving the deflection guide member 8 of the associated tape guide block 6 and controlling the shift position of the tape guide block 6. The units 43 to 46 may be formed by moulding synthetic resin or machining a single metallic blank. The slide piece 44 is disposed within a cut-out 47 formed in the chassis 1 in continuation with the guide slot 13 and has a cut-out 44a in continuation with the guide slot 13. The upper surface of the slide piece 44 is formed as a slide guide surface for positioning the flat bottom surface of the guide base member 12, said guide surface being flush with the upper surface of the chassis 1. The slide step 45 is formed in opposition to the base part of the slide piece 44 with the surface of the slide step 45 opposed to the base part of the slide piece 44 acting as another slide guide surface for positioning the upper flat surface of the guide base member 12. In this manner, the guide base member 12 of the tape guide block 6 proceeding towards the control block 42 is sandwiched at the upper and lower sides thereof by the slide piece 44 and the slide step 45 by the aforementioned slide guide surfaces, as shown in Figure 10, for regulating the vertical position of the tape guide block 6 with respect to the drums 3, 4.

The control piece 46 is projected towards the foremost part of the slide piece 44 in parallel with the slide guide surfaces and formed with a control vee groove 46a for receiving the outer periphery of the associated deflection guide member 8. For receiving the guide member 8 correctly and without tilting, the foremost abutment sides of the control groove 46a are formed so as to be transversely symmetrical to each other and perpendicular to the aforementioned slide guide surfaces.

The slide piece 44, the slide step 45, the control piece 46 and the mounting piece 43 of the control block 42 are formed integrally with a high dimensional accuracy and are so designed that, when the mounting piece 43 is attached by e.g. three set screws to the reference surface of the drum mounting base plate 2, the elements 43 to 46 can be positioned accurately relative to the drums 3, 4, such that the tape guide blocks 6, 6 can be positioned and held in the proper loading position with respect to the drums 3,4.

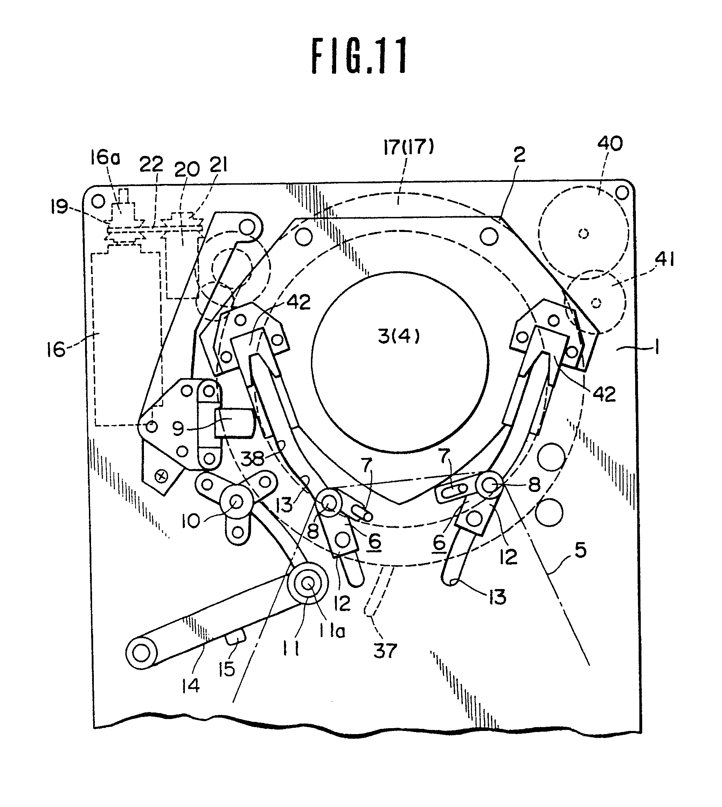

When the magnetic tape 5 accommodated in the tape cassette is loaded onto the drums 3, 4 of the above described magnetic recording and reproducing apparatus, the control motor 16 is rotated forward for causing rotation of the rotary members 17, 17 in mutually opposite directions. The loading arms 25, 25 are shifted by the rotation of the rotary members 17, 17 under the traction of the associated limiting springs 27, 27, so that the tape guide blocks 6, 6 are shifted from inside the tape cassette towards the control blocks 42, 42 along the guide slots 13, 13 as shown in Figure 11, with the tape 5 engaging at all times with the tape guide blocks 6, 6. When the deflection guide members 8, 8 of the tape guide blocks 6, 6 are received by the control grooves 46a, 46a of the control blocks 42, 42, the movement of the tape guide blocks 6, 6 ceases. At this time, the tape 5 is wound approximately 90° about the outer periphery of the drums 3, 4. Under such conditions, the guide base members 12, 12 are positioned by the slide guide surfaces of the control blocks 42, 42, while the deflection guide members 8, 8 are positioned by the control grooves 46a, 46a, so that the deflection guide members 8, 8 and the inclined guide members 7, 7 are brought to and held at the proper position and tilting angle.

After the tape guide blocks 6, 6 are brought to a stop, the control motor 16 is further driven in operation until the rotary members 17, 17 are turned further by a preset angle. At this time, the operation of the control motor 16 ceases. The spring tension of the limiting springs 27, 27 expanded in this manner is applied to the tape guide blocks 6, 6 so that the tape guide blocks 6, 6 are brought into and held at a stable pressure contact with the control blocks.

As the tape guide blocks 6, 6 are moved in the above described manner, the engaging foremost part 37 of the pinch roller operating lever 31 of the other rotary member 17 is engaged with the projection 39 of the supporting arm 14, thus initiating the movement of the pinch roller 11. When the tape guide blocks 6, 6 are in pressure contact with the control blocks 42, 42, the pinch roller 11 has been shifted to a pinch OFF position, that is, to a position slightly spaced apart from the capstan 10. A reel block or take-up reel, not shown, is driven in this state for performing various operations, such as fast feed (FF), rewind (REW) or stop (STOP) of the magnetic tape 5.

As the control motor 16 is driven further forward, the rotary members 17, 17 are further rotated partially until the pinch roller 11 abuts on the capstan 10 with the intermediary of the magnetic tape 5. The control motor 16 is driven further a preset angle for applying the tension of the limiting spring 34 to the pinch roller 11 so that the pinch roller 11 and the capstan 10 are held in abutment or pinch ON position. In this state, the magnetic tape 5 is held in the proper guide state and caused to run at a constant speed to permit signal recording or reproduction as desired.

The control motor 16 may be driven in reverse from the pinch ON state so that the pinch roller 11 is released from pressure contact with and spaced apart from the capstan 10 so that the pinch OFF state is again reached. As the control motor 16 is driven further in reverse, the tape guide blocks 6, 6 and the pinch roller 11 are returned to the preloading state.

It will be appreciated from the foregoing that the present invention provides a magnetic recording and reproducing apparatus wherein the single control motor 16 is used for driving the rotary members 17, 17 and thereby controlling the operation of the tape guide blocks 6, 6 and the pinch roller 11, thus ensuring a simpler construction with reduction in the number of component parts and the overall size and facilitating the assembly operation.

Since the operation of the pinch roller 11 and the tape guide blocks 6, 6 are controlled by the single control motor, the operation of these component parts is co-ordinated and the possibility of malfunction is reduced with a resultingly improved operating reliability.

The invention is not limited to the above described embodiment. For example, a single tape guide block 6 and the pinch roller 11 may be driven in operation by a single rotary member 17. The invention may be modified according to the type or structure of the particular device to which the invention is applied and thus the present invention may be extensively applied to the magnetic recording or reproducing apparatus in which the tape guide block or blocks and the pinch roller are driven in operation for loading the magnetic tape.

## Claims

1. Cassette tape magnetic tape recording and/or reproducing apparatus comprising

   a rotary drum unit (3, 4) having a magnetic head or magnetic heads for recording or reproducing signals on or from magnetic tape (5) on the peripheral surface of the drum unit (3, 4);

   an electric motor (16);

   loading means (6, 17, 6, 17) including tape guide means (7, 8) and means (12) mounting the tape guide means (7, 8) for limited movements in predetermined paths (13) between first positions in which the tape guide means (7, 8) are engageable with the magnetic tape (5) within a cassette, and second positions in which the tape guide means (7, 8) guide the tape withdrawn from the cassette about at least a portion of the peripheral surface of the drum unit (3, 4), in which second positions the magnetic head or magnetic heads can record or reproduce signals thereon; and a control block (42, 42) situated on the chassis corresponding to the second position of the respective tape guide means (7, 8) and against which the tape guide means can be urged in the loading direction by yieldable means (27) whereby the control block (42, 42) positionally stabilizes the tape guide means (7, 8) urged thereagainst;

   a capstan (10) to rotate at a constant speed;

   means (14) supporting a pinch roller (11) for movement between an engaged position in which the pinch roller (11) is pressed against the capstan (10) with the tape (5) therebetween and a disengaged position in which the pinch roller (11) is separated from the capstan (10); and

   pinch roller actuating means (31, 39) engageable with the pinch roller supporting means (14) to cause movement of the pinch roller to the engaged position pressed against the capstan, the electric motor (16) being actuatable to shift the loading means (6, 17, 6, 17) between the first and second positions and to shift the pinch roller actuating means (31, 39) to control the movement of the pinch roller supporting means (14) between the engaged and disengaged positions;

   characterised by rotary ring means (17, 17) coupled to the electric motor (16) to be turned in opposed loading and unloading directions, and arms (25, 25) pivoted on the rings and extending between the ring means (17, 17) and the tape guide means (7, 8) and causing the tape guide means to move with the ring means between said first and second positions in response to the turning of the ring means in the loading and unloading directions, the arms (25, 25) being biased by spring means (27, 27) against pivoting of the arms upon further turning of the ring means (17, 17) in the loading direction after the tape guide means (7, 8) have completed said limited movements to the second positions;, said pinch roller actuating means (31, 39) being mounted on the rotary ring means (17, 17) and causing said movement of the pinch roller to its engaged position in response to said further turning of the ring means (17, 17) in the loading direction.

2. Cassette tape magnetic recording and/or reproducing apparatus according to claim 1, in which the connecting means comprises arm means (25, 25) pivotally connected, at one end, to the tape guide means (7, 8), and follower pin means (29, 29) at the other end of the arm means (25, 25); and in which the rotary ring means (7,17) has arcuate slot means (26, 26) therein slidably receiving the follower pin means (29, 29), and the yieldable means is in the form of tension spring means (27, 27) urging the follower pin means (29, 29) against one end of the arcuate slot means (26, 26).

3. Cassette-type magnetic tape recording and/or reproducing apparatus according to claim 2, in which the pinch roller actuating means includes an actuating member (31) mounted on the rotary ring means (17) for limited movements relative to the rotary ring means in the loading and unloading directions and engageable with the means (14) supporting the pinch roller (11), and second tension spring means (34) connected between the rotary ring means (17, 17) and the actuating member (31) yieldably to urge the actuating member (31) to the limit of said movements thereof relative to the ring means (17) in the loading direction, the second tension spring means (34) being loaded upon movement of the pinch roller (11) to the engaged position to provide the force with which the pinch roller (11) is pressed against the capstan (10).

4. Cassette-type magnetic tape recording and/or reproducing apparatus according to claim 3, in which the means supporting the pinch roller (11) includes a support arm (14) which is pivotally mounted adjacent one end and which rotatably supports the pinch roller (11) at a distance from said one end, the support arm (14) being biased in a direction moving the pinch roller away from the capstan (10), an actuating pin (39) extending from the support arm (14) and the actuating member (31) having a nose portion (37) extending radially with respect to the ring means (17) and to bear against the actuating pin (39) upon turning of the ring means (17) in the loading direction.

5. Cassette-type magnetic tape recording and/or reproducing apparatus according to claim 1, in which the means mounting the tape guide means includes a chassis (1) having a slot (13, 13) therein for each of the tape guide means (7, 8) and along which the tape guide means is directed in the respective path.-


**Revendications**

1. Appareil d'enregistrement et/ou de reproduction magnétique à cassette à bande comportant

   une unité de tambour rotatif (3, 4) ayant une tête magnétique ou des têtes magnétiques afin d'enregistrer ou de reproduire des signaux sur ou à partir d'une bande magnétique (5) sur la surface périphérique de l'unité de tambour (3, 4);

   un moteur électrique (16);

   des moyens de chargement (6, 17, 6, 17) comprenant des moyens de guidage de bande (7, 8) et des moyens (12) de montage des moyens de guidage de bande (7, 8) pour des déplacements limités sur des trajectoires déterminées (13) entre des premières positions dans lesquelles les moyens de guidage de bande (7, 8) peuvent être engagés avec la bande magnétique (5) à l'intérieur de la cassette, et des deuxièmes positions dans lesquelles les moyens de guidage de bande (7, 8) guident la bande retirée de la cassette sur au moins une partie de la surface périphérique de l'unité de tambour (3, 4), la tête magnétique ou les têtes magnétiques pouvant enregistrer ou reproduire des signaux dans ces deuxièmes positions; et un bloc de contrôle (42, 42) situé sur le châssis correspondant à la deuxième position des moyens de guidage de bande (7, 8) respectifs et contre lequel les moyens de guidage de bande peuvent être poussés dans la direction de chargement par des moyens élastiques (27), le bloc de contrôle (42, 42) stabilisant en position les moyens de guidage de bande (7, 8) poussés contre lui;

   un cabestan (10) tournant à vitesse constante;

   des moyens (14) supportant un galet de pincement (11) pour déplacement entre une position engagée dans laquelle le galet de pincement (11) est pressé contre le cabestan (10) avec la bande (5) entre eux et une position désengagée dans laquelle le galet de pincement (11) est séparé du cabestan (10); et

   des moyens d'actionnement de galet de pincement (31, 39) pouvant engager les moyens supportant le galet de pincement (14) afin d'engendrer un déplacement du galet de pincement vers la position engagée pressée contre le cabestan, le moteur électrique (16) pouvant être actionné pour déplacer les moyens de chargement (6, 17, 6, 17) entre les premières et deuxièmes positions et pour déplacer les moyens d'actionnement de galet de pincement (31, 39) afin de commander le déplacement des moyens supportant le galet de pincement (14) entre les positions engagée et désengagée;

   caractérisé par des couronnes rotatives (17, 17) reliées au moteur électrique (16) afin d'être entraînées en rotation dans des directions de chargement et de déchargement opposées, et des bras (25, 25) pivotant sur les couronnes et s'étendant entre les couronnes (17, 17) et les moyens de guidage de bande (7, 8) et amenant les moyens de guidage de bande à se déplacer avec les couronnes entre les dites premières et deuxièmes positions en réponse à la rotation des couronnes dans les directions de chargement et de déchargement, les bras (25, 25) étant rappelés par des ressorts (27, 27) à l'encontre du pivotement des bras lors d'une rotation supplémentaire des couronnes (17, 17) dans la direction de chargement après que les moyens de guidage de bande (7, 8) aient terminé les dits déplacements limités vers les deuxièmes positions; les dits moyens d'actionnement de galet de pincement (31, 39) étant montés sur les couronnes rotatives (17, 17) et engendrant le dit déplacement du galet de pincement vers sa position engagée en réponse à la dite rotation supplémentaire des couronnes (17, 17) dans la direction de chargement.

2. Appareil d'enregistrement et/ou de reproduction magnétique à cassette selon la revendication 1, dans lequel les moyens de liaison comportent des bras (25, 25) reliés de façon pivotante, à une extrémité, aux moyens de guidage de bande (7, 8), et un doigt suiveur (29, 29) à l'autre extrémité des bras (25, 25); et dans lequel les couronnes rotatives (17, 17) présentent une fente curviligne (26, 26) recevant de façon coulissante le doigt suiveur (29, 29), et les moyens élastiques se présentent sous la forme de ressorts de traction (27, 27) poussant le doigt suiveur (29, 29) contre une extrémité de la fente curviligne (26, 26).

3. Appareil d'enregistrement et/ou de reproduction magnétique à cassette selon la revendication 2, dans lequel les moyens d'actionnement de galet de pincement comportent un élément d'actionnement (31) monté sur les couronnes rotatives (17) pour des déplacements limités par rapport aux couronnes rotatives dans les directions de chargement et de déchargement et pouvant être engagé avec les moyens (14) supportant le galet de pincement (11), et un second ressorts de traction (34) relié entre les couronnes rotatives (17, 17) et l'élément d'actionnement (31) afin de pousser l'élément d'actionnement (31) vers la limite des dits déplacements par rapport aux couronnes (17) dans la direction de chargement, le second ressort de traction (34) étant chargé lors du déplacement du galet de pincement (11) vers la position engagée afin de procurer la force avec laquelle le galet de pincement (11) est pressé contre le cabestan (10).

4. Appareil d'enregistrement et/ou de reproduction magnétique à cassette selon la revendication 3, dans lequel les moyens supportant le galet de pincement (11) comportent un bras de support (14) qui est monté de façon pivotante de manière adjacente à une extrémité et qui supporte de façon rotative le galet de pincement (11) à une certaine distance de la dite extrémité, le bras de support (14) étant rappelé dans une direction déplaçant le galet de pincement à l'écart du cabestan (10), une broche d'actionnement (39) s'étendant depuis le bras de support (14) et l'élément d'actionnement (31) ayant une partie d'extrémité (37) s'étendant radialement par rapport aux couronnes (17) et de façon à porter sur la broche d'actionnement (31) lors de la rotation des couronnes (17) dans la direction de chargement.

5. Appareil d'enregistrement et/ou de reproduction magnétique à cassette selon la revendication 1, dans lequel les moyens de montage des moyens de guidage de bande comprennent un châssis (1) ayant une fente (13, 13) pour chacun des moyens de guidage de bande (7, 8) et le long de laquelle les moyens de guidage de bande sont dirigés sur la trajectoire respective.

**Ansprüche**

1. Magnetband-Kassetten-Aufzeichnungs- und/oder -Wiedergabegerät, mit einer drehbaren Trommeleinheit (3,4), die einen Magnetkopf oder Magnetköpfe zum Aufzeichnen oder Wiedergeben von Signalen auf oder von einem Magnetband (5) an der Umfangsfläche der Trommeleinheit (3,4) umfaßt, einem Elektromotor (16), einer Ladeeinrichtung (6,17,6,17) einschließlich von Bandführungmitteln (7,8) und die Bandführungsmittel (7,8) abstützenden Mitteln (12) für begrenzte Bewegungen in vorbestimmten Bahnen (13) zwischen ersten Stellungen, in denen die Bandführungsmittel (7,8) mit dem Magnetband (5) innerhalb einer Kassette in Eingriff bringbar sind, und zweiten Stellungen, in denen die Bandführungsmittel (7,8) das aus der Kassette gezogene Band um wenigstens einen Teil der Umfangsfläche der Trommeleinheit (3,4) führen, in welchen zweiten Stellungen Signale mittels des Magnetkopfes oder der Magnetköpfe auf das Band aufgezeichnet oder von diesen wiedergegeben werden können, und einschließlich eines Steuerblocks (42,42), der in Übereinstimmung mit den zweiten Stellungen der jeweiligen Bandführungsmittel (7,8) an dem Chassis angeordnet ist und gegen den die Bandführungsmittel in Laderichtung durch elastische Mittel (27) beaufschlagt werden können, wodurch der Steuerblock (42,42) die gegen ihn beaufschlagten Bandführungsmittel (7,8) lagestabilisiert, einem Kapstan (10) zur Drehung mit einer konstanten Geschwindigkeit, einer eine Andruckrolle (11) abstützende Einrichtung (14) zur Bewegung zwischen einer eingerückten Position, in der die Andruckrolle (11) gegen den Kapstan (10) mit dem dazwischen befindlichen Band (5) gedrückt ist, und einer ausgerückten Position, in der die Andruckrolle (11) von dem Kapstan (10) entfernt ist, und einer Andruckrollen-Betätigungseinrichtung (31,39), die mit der Andruckrollen-Abstützeinrichtung (14) in Eingriff bringbar ist, um eine Bewegung der Andruckrolle in die eingerückte Position zu bewirken, in der diese gegen den Kapstan gedrückt ist, wobei der Elektromotor (16) betätigbar ist, um die Ladeeinrichtung (6,17,6,17) zwischen der ersten und der zweiten Stellung zu verschieben und die Andruckrollen-Betätigungseinrichtung (31,39) zur Steuerung der Bewegung der Andruckrollen-Abstützeinrichtung (14) zwischen der eingerückten und ausgerückten Position zu verschieben, **gekennzeichnet** durch eine drehbare Ringeinrichtung (17,17), die mit dem Elektromotor (16) gekoppelt ist, um in eine Lade- und Entladerichtung, die einander entgegengesetzt sind, gedreht zu werden, und durch Arme (25,25), die an die Ringe angelenkt sind, sich zwischen der Ringeinrichtung (17,17) und den Bandführungsmitteln (7,8) erstrecken und die Bandführungsmittel mit der Ringeinrichtung zwischen der ersten und zweiten Stellung in Reaktion auf die Drehung der Ringeinrichtung in die Lade- und Entladerichtung bewegen, wobei die Arme (25,25) durch Federmittel (27,27) beaufschlagt sind, die einer Verschwenkung der Arme bei weiterer Drehung der Ringeinrichtung (17,17) in die Laderichtung nach Beendigung der begrenzten Bewegungen der Bandführungsmittel (7,8) in die zweiten Stellungen entgegenwirken, und wobei ferner die Andruckrollen-Betätigungseinrichtung (31,39) an der drehbaren Ringeinrichtung (17,17) angebracht ist und die Bewegung der Andruckrolle in ihre eingerückte Position in Reaktion auf die weitere Drehung der Ringeinrichtung (17,17) in die Laderichtung hervorruft.

2. Magnetband-Kassetten-Aufzeichnungs- und/oder -Wiedergabegerät nach Anspruch 1, in welchem die Verbindungseinrichtung an einem Ende an die Bandführungsmittel (7,8) angelenkte Armglieder (25,25) und Mitnehmerstiftelemente (29,29) am anderen Ende der Armglieder (25,25) umfaßt, und die drehbare Ringeinrichtung (17,17) bogenförmige Schlitzelemente (26,26) aufweist, in denen sie die Mitnehmerstiftelemente (29,29) verschiebbar aufnimmt, und wobei die elastischen Mittel als Zugfedermittel (27,27) ausgebildet sind, die die Mitnehmerstiftelemente (29,29) gegen ein Ende der bogenförmigen Schlitzelemente (26,26) beaufschlagen.

3. Magnetband-Kassetten-Aufzeichnungs- und/oder -Wiedergabegerät nach Anspruch 2, in welchem die Andruckrollen-Betätigungseinrichtung ein Betätigungsglied (31), das an der drehbaren Ringeinrichtung (17) für begrenzte Bewegungen relativ zur drehbaren Ringeinrichtung in die Lade- und Entladerichtung angebracht und in Eingriff mit der die Andruckrolle (11) abstützenden Einrichtung (14) bringbar ist, und eine zweite, Zugfedereinrichtung (34) umfaßt, die die drehbare Ringeinrichtung (17,17) und das Betätigungsglied (31) elastisch verbindet, um das Betätigungsglied (31) bis zur Grenze seiner Bewegungen relativ zur Ringeinrichtung (17) in die Laderichtung zu beaufschlagen, wobei die zweite, Zugfedereinrichtung (34) bei Bewegung der Andruckrolle (11) in die eingerückte Position beaufschlagt wird, um die Kraft zu liefern, mit der die Andruckrolle (11) gegen den Kapstan (10) gedrückt wird.

4. Magnetband-Kassetten-Aufzeichnungs- und/oder -Wiedergabegerät nach Anspruch 3, in welchem die die Andruckrolle (11) abstützende Einrichtung einen Stützarm (14), der im Bereich eines Endes schwenkbar befestigt ist und im Abstand von diesem Ende die Andruckrolle (11) drehbar abstützt, wobei der Stützarm (14) in eine Richtung beaufschlagt ist, in der die Andruckrolle vom Kapstan (10) wegbewegt wird, und einen Betätigungsstift (39) umfaßt, der sich vom Stützarm (14) erstreckt, wobei das Betätigungsglied (31) einen Nasenabschnitt (37) aufweist, der sich bezüglich der Ringeinrichtung (17) radial erstreckt und bei Drehung der Ringeinrichtung (17) in die Laderichtung an den Betätigungsstift (39) anlegt.

5. Magnetband-Kassetten-Aufzeichnungs- und/oder -Wiedergabegerät für Kassetten nach Anspruch 1, in welchem die die Bandführungsmittel abstützenden Mittel ein Chassis (1) umfassen, das einen Schlitz (13,13) für jedes der Bandführungsmittel (7,8) aufweist und entlang derer die Bandführungsmittel in der jeweiligen Bahn geführt werden.

# FIG.1

# FIG.2

# FIG.3

# FIG.4

# FIG.5

# FIG.6

# FIG.7

# FIG.8

15

# FIG.9

# FIG.10

# FIG.11

# FIG.12